# EUROPÄISCHE PATENTSCHRIFT

(11) **EP 2 032 869 B1**
(45) Veröffentlichungstag und Bekanntmachung des Hinweises auf die Patenterteilung: **23.03.2011**
(21) Anmeldenummer: 07729942.8
(22) Anmeldetag: 06.06.2007
(51) Int. Cl.: F16D 48/06, F16H 59/44, F16H 61/20

(54) **VERFAHREN ZUR ERKENNUNG EINES PASSIVEN ANFAHRVORGANGS BEI EINEM KRAFTFAHRZEUG**
METHOD FOR IDENTIFYING A PASSIVE ROLLING MOMENT OF A MOTOR VEHICLE
PROCEDE DE DETECTION D'UN PROCESSUS DE DEMARRAGE PASSIF D'UN VEHICULE AUTOMOBILE

(30) Priorität: 29.06.2006 DE 102006030157
(43) Veröffentlichungstag der Anmeldung: 11.03.2009
(73) Patentinhaber: ZF Friedrichshafen AG, 88038 Friedrichshafen (DE)
(72) Erfinder: DÖBELE, Bernd, 88682 Salem (DE); WIENCEK, Norbert, 88709 Hagnau (DE)
(86) Internationale Anmeldenummer: PCT/EP2007/055567
(87) Internationale Veröffentlichungsnummer: WO 2008/000597

(56) Entgegenhaltungen:
- EP-A- 1 661 781
- WO-A-02/062640
- DE-A1- 19 932 052
- DE-A1-102004 059 262

## Beschreibung

Die Erfindung betrifft ein Verfahren zur Erkennung eines passiven Anfahrvorgangs bei einem Kraftfahrzeug gemäß dem Oberbegriff des Patentanspruchs 1.

In Kraftfahrzeugen mit automatischen oder automatisierten Schaltgetrieben wird bei Anfahr-, Anhalte- oder Gangwechselvorgängen ein automatisches Anfahrelement, insbesondere eine Anfahrkupplung, angesteuert, durch die eine Koppelung des Antriebsstranges mit dem Antriebsmotor beeinflusst wird. Dazu werden einer elektronischen Steuereinrichtung verschiedene betriebsrelevante Sensordaten, wie beispielsweise Motordrehzahl, Getriebeeingangsdrehzahl, Fahrpedalstellung, Fahrgeschwindigkeit sowie Schaltabsicht zugeführt und nach einer entsprechenden Auswertung ein Aus- oder Einkuppeln der Anfahrkupplung, gegebenenfalls mit einem variablen Schließ- bzw. Öffnungsgrad, ausgelöst, um einen einwandfreien und komfortablen Fahrbetrieb zu gewährleisten. Auf ein vom Fahrer zu betätigendes Kupplungspedal kann somit verzichtet werden.

In der Regel wird die Anfahrkupplung beim Anhalten des Fahrzeuges ausgekuppelt, insbesondere um zu verhindern, dass der Verbrennungsmotor abgewürgt wird, wenn dessen Drehzahl unter eine Leerlaufdrehzahl abfällt und/oder um eine Kriechneigung zu begrenzen, die bei Automatgetrieben bei eingelegter Fahrstufe im Leerlauf bei nicht gedrückter Bremse auftreten kann.

In einem derartigen Betriebszustand kann ein aktueller Fahrwiderstand, entsprechend einer Fahrbahnneigung, Fahrbahnbeschaffenheit u.a., derart wirken, dass sich das Fahrzeug passiv, also ohne Einleiten eines Antriebsmomentes über den Antriebsmotor, bei mit den angetriebenen Fahrzeugrädern kraftschlüssig verbundenem Getriebe, in eine Anrollrichtung in Bewegung setzt, wobei die Anrollrichtung einem angewählten Vorwärtsgang oder Rückwärtsgang und damit einem Anfahrwunsch des Fahrers entsprechen oder aber diesem entgegengesetzt sein kann.

Ist die Anrollrichtung der gangbezogenen Fahrtrichtung entgegengesetzt, bewegt sich beispielsweise das Fahrzeug durch Anrollen an einer Fahrbahnneigung mit eingelegtem Rückwärtsgang in Vorwärtsrichtung, so drehen auch die Getriebeeingangswelle und die Antriebswelle des Antriebsmotors und damit auch die Sekundärseite sowie die Primärseite des Anfahrelementes entsprechend entgegengesetzt, also in reversierenden, also umsteuernden Drehrichtungen.

Dieser an sich irreguläre Betriebszustand sollte möglichst umgehend durch ein Abfangen des Fahrzeugs beendet werden, um unkontrollierte Geschwindigkeitszunahmen und unzulässig hohe Drehzahlen der Kupplungselemente, beispielsweise Reibscheiben, zu vermeiden. Wird das Fahrzeug durch die Kupplung abgefangen, so kann es, abhängig von der kinetischen Energie des Fahrzeugs, zum Zeitpunkt des Einkuppelns entweder zur Umkehrung der Fahrtrichtung des Fahrzeugs in die angewählte Fahrtrichtung oder zu einer schlagartigen Absenkung der Motordrehzahl kommen, im Extremfall sogar bis zur Drehrichtungsumkehr des Antriebsmotors.

Insbesondere bei schweren Nutzfahrzeugen, die zunehmend mit automatisierten Getriebeschaltungen in Verbindung mit einer automatischen Kupplung ausgestattet sind, können an steilen Hängen oder Rampen durch unkontrolliertes Anrollen für den Fahrer nur schwer beherrschbare Anfahrsituationen entstehen und/oder ein erhöhter Verschleiß und sogar Schäden an Komponenten des Antriebsstranges (Kupplung, Motor, Getriebe) beim Schließen der Anfahrkupplung die Folge sein.

Aus der DE 199 32 052 A1 ist ein Verfahren zur Erkennung der Drehrichtung einer Getriebeabtriebswelle eines automatisierten Getriebes bekannt, bei dem ein zeitlicher Verlauf der Abtriebsdrehzahl oder einer dazu äquivalenten Größe, beispielsweise ein Bremsdruckverlauf, mit in einem elektronischen Speicher abgelegten verschiedenen charakteristischen Kenngrößen, beispielsweise einer Abtriebsdrehzahl-Kennlinie für einen Fahrzustand "Vorwärtsfahrt am Hang bergauf mit Rückrollen mit Last", verglichen wird. In Abhängigkeit vom ermittelten Fahrzustand erfolgt eine jeweilige Berechnung eines Synchronpunktes, bei dem eine Druckansteuerung zum Schalten der Kupplung erfolgen kann. Durch die Berechnung eines Synchronpunktes, der ein Anrollen des Fahrzeugs entgegen der angewählten Fahrtrichtung berücksichtigt, wird eine zeitlich ungünstige Ansteuerung der Kupplung, die zu Komforteinbußen und Überlastungen von Kupplung und Getriebe führen kann, verhindert.

Das bekannte Verfahren kommt ohne einen zusätzlichen Drehrichtungssensor oder einen Drehzahlsensor, der drehrichtungs-sensitiv ausgebildet ist, aus, wodurch Kosten eingespart werden. Es stellt ein wirksames Mittel zum Schutz von Kupplung und Getriebe bei den beschriebenen Anrollvorgängen zur Verfügung. Nachteilig daran ist jedoch, dass die Plausibilitätsprüfung anhand der abgelegten Kennlinien einen relativ zeitaufwendigen und komplexen Rechenalgorithmus erfordert, der bis zu einer eindeutigen Zuordnung des tatsächlichen Fahrzustandes unter Umständen mit der Hinzuziehung weiterer Parameter, wie einer Lastanforderung anhand einer Fahrpedalstellung oder einer Bremspedatbetätigung, zu Schaltverzögerungen im normalen Schaltbetrieb führen kann. Zudem sind die Kennlinien fahrzeugtypspezifisch, so dass jeweils eine Überprüfung und gegebenenfalls eine Anpassung bei jedem angewandten Fahrzeugtyp erforderlich ist. Ferner wird ein relativ kostenaufwendiger Datenspeicher sowie eine schnelle Signalübertragungseinrichtung benötigt.

Aus der DE 10 2004 057 122 A1 der Anmelderin ist ein weiteres Verfahren zum Erkennen der Drehrichtung der Sekundärseite einer Anfahrkupplung bekannt, bei dem die Anfahrkupplung mit einem variablen Schließgrad geschlossen wird, wenn eine aktuelle Drehzahl auf der Sekundärseite der Kupplung, also getriebeseitig, größer ist als eine aktuelle Drehzahl auf der Primärseite, also motorseitig. Der Schließgrad der Kupplung wird dabei abhängig von der Beschleunigung der Sekundärdrehzahl eingestellt. Anschließend wird die Drehzahl des Antriebsmotors mittels einer Motorsteuerung auf eine Solldrehzahl, vorzugsweise die Sekundärdrehzahl, geregelt. Gleichen sich daraufhin die Primärdrehzahl und die Sekundärdrehzahl innerhalb eines vorgegebenen Zeitraumes an, wird eine gleiche Drehrichtung der Sekundärseite und der Primärseite der Anfahrkupplung erkannt. Bewirkt das Schließen der Anfahrkupplung hingegen ein Absinken der Primärdrehzahl bzw, der Motordrehzahl unter einen Schwellwert, insbesondere unter eine Leerlaufdrehzahl, wird eine entgegengerichtete Drehrichtung der Sekundärseite erkannt.

Dieses Verfahren kommt ebenfalls ohne einen aufwendigen drehrichtungserkennenden Sensor aus. Zudem ist kein Kennlinienspeicher erforderlich und keine fahrzeugtypspezifiische Anpassung nötig, wodurch weitere Kosten eingespart werden. Nachteilig wirkt sich aus, dass, in jedem Fall zunächst die Kupplung zumindest bis zu einem bestimmten Grad geschlossen werden muss und erst dann an der Wirkung dieses Schließvorgangs gegebenenfalls auf reversierende Drehrichtungen der Kupplungsseiten geschlossen werden kann. Dies macht präventive Vorkehrungen zum Schutz der Kupplung vor einer übermäßigen Belastung bei hohen Drehzahldifferenzen bei entgegengesetzten Drehrichtungen erforderlich, insbesondere schnelle Steuerungsbefehle zum Öffnen der Kupplung oder zum Schalten des Getriebes in eine sichere Neutralposition. Zudem kann durch zusätzliche Kupplungsschaltungen und Motordrehzahlerhöhungen bei dem Verfahren ein erhöhter Kraftstoffverbrauch und Verschleiß auftreten.

Vor diesem Hintergrund liegt der Erfindung die Aufgabe zugrunde, ein Verfahren und eine Vorrichtung zur Erkennung eines passiven Anfahrvorgangs bei einem Kraftfahrzeug anzugeben, die nah mit dem Beginn eines derartigen Anfahrvorganges reversierende Drehrichtungen zwischen einer motorseitigen Antriebswelle und einer getriebeseitigen Getriebeeingangswelle erkennen sowie dennoch einfach und kostengünstig sind.

Die Lösung dieser Aufgabe ergibt sich aus den Merkmalen des unabhängigen Anspruchs, während vorteilhafte Ausgestaltungen und Weiterbildungen der Erfindung den Unteransprüchen entnehmbar sind.

Die Erfindung macht sich die Tatsache zu Nutze, dass viele Personenfahrzeuge und in der Regel alle größeren Nutzfahrzeuge mit einer drehrichtungsabhängig fördernden Getriebeölpumpe ausgestattet sind, deren Drehrichtung mit der Drehrichtung der Getriebeeingangswelle gekoppelt ist. Der Erfindung liegt die Erkenntnis zugrunde, dass der Öldruck in einem Getriebe mit einer derartigen Ölpumpe als ein Indikator für die Drehrichtung der Getriebeeingangswelle nutzbar ist.

Demnach geht die Erfindung aus von einem Verfahren zur Erkennung eines passiven Anfahrvorgangs bei einem Kraftfahrzeug, beispielsweise eines unerwünschten Anfahrvorgangs, bei dem sich das Fahrzeug entgegen einer angewählten gangbezogenen Fahrtrichtung in Bewegung setzt, mit Mitteln zur Erfassung reversierender Drehrichtungen einer mit einer Getriebeeingangswelle eines Geschwindigkeitswechselgetriebes verbundenen Sekundärseite eines automatischen Anfahrelementes gegenüber einer mit einer Antriebswelle eines Antriebsmotors verbundenen Primärseite des Anfahrelementes, wobei dem Geschwindigkeitswechselgetriebe eine drehrichtungsabhängig fördernde Getriebeölpumpe zugeordnet ist.

Unter einem passiven Anfahrvorgang wird ein Anfahrvorgang bzw. ein Anrollen des Fahrzeuges, insbesondere entgegen einer gewünschten Fahrtrichtung verstanden, bei dem der Fahrwiderstand derart wirkt, dass sich das Fahrzeug ohne Einleiten eines Antriebsmomentes durch den Antriebsmotor, bei kraftschlüssigem Getriebe, in Bewegung setzt.

Unter einem automatischen Anfahrelement werden alle Kupplungssysteme, die keine Betätigung durch den Fahrer erfordern, insbesondere Anfahrkupplungen, die über ein elektronisches Steuergerät ansteuerbar sind, aber auch selbsttätige Kupplungstypen, beispielsweise Fliehkraftkupplungen, die motordrehzahlabhängig unter Fliehkraftwirkung kraftschlüssig werden, verstanden.

Zur Lösung der gestellten Aufgabe sieht die Erfindung vor, dass die Drehzahl der Getriebeeingangswelle und der Öldruck in dem Geschwindigkeitswechselgetriebe zeitaufgelöst erfasst und einer Korrelationsprüfung unterzogen werden, mittels derer bei einer mangelnden Korrelation nicht gleiche Drehrichtungen der Primärseite und der Sekundärseite des Anfahrelementes festgestellt werden, und dass als Folge davon auf einen daraus erkannten unerwünschten passiven Anfahrvorgang antriebsrelevante Maßnahmen eingeleitet werden.

Viele Getriebe in Kraftfahrzeugen, insbesondere in der in Nutzfahrzeugen verwendeten Baugröße, verfügen über Getriebeölpumpen zur Schmierung und Kühlung des Getriebes, die üblicherweise drehrichtungsabhängig fördern. Demnach fördert eine derartige Schmierölpumpe nur dann oder wenigsten nur dann korrekt, wenn sich ihr Antrieb, also die Getriebeeingangswelle, in der richtigen Richtung dreht, also in der gleichen Richtung wie die Antriebswelle des Antriebsmotors. Daher besteht eine eindeutige Korrelation zwischen der Drehrichtung der Sekundärseite der Kupplung und dem Schmieröldruck im Getriebe.

Durch das Verfahren wird somit bei allen derart ausgerüsteten Fahrzeuge eine einfache und kostengünstige Überwachung der Drehrichtung der Getriebeeingangswelle ermöglicht, die ohne zusätzlichen Drehrichtungssensor, aufwendige Rechenalgorithmen oder Kennlinienvergleiche sowie ohne eine gegebenenfalls versuchsweise Kupplungsbetätigung eine Drehrichtungsumkehr aufgrund eines Anrollens des Fahrzeugs entgegen des aktuell vom Fahrer zum Anfahren angewählten Ganges zuverlässig erkennt.

Insbesondere kann, wie bei einer besonders vorteilhaften Ausgestaltung der Erfindung vorgesehen ist, aus einem Drehzahlanstieg der Getriebeeingangswelle, der keinen Anstieg des Öldrucks im Geschwindigkeitswechselgetriebe verursacht, auf eine reversierte Drehrichtung der Getriebeeingangswelle geschlossen werden. Dazu genügt schon ein geringfügiges Anrollen mit einem entsprechenden Anstieg der Drehzahl der Getriebeeingangswelle, bei dem kein Öldruck oder kein Öldruckanstieg im Getriebe gemessen wird, für eine schnelle und sichere Erkennung gegenläufiger Drehrichtungen der beiden Kupplungsseiten.

Da in automatisierten Getrieben mit einer Getriebeölpumpe in der Regel ein günstiger drehrichtungsinvarianter Drehzahlsensor für die Getriebeeingangswelle sowie ein druckempfindliches Mittel (Druckschalter oder Drucksensor) für die Öldrucküberwachung im Getriebe vorhanden ist und die Motordrehzahl ohnehin zur Verfügung steht, entsteht für das erfindungsgemäße Verfahren kein zusätzlicher Aufwand an Bauteilen, welches sich besonders kostengünstig sowie bauraum- und gewichtsparend auswirkt.

Für die Drehrichtungsüberwachung ist neben dem Drehzahlverlauf der Getriebeeingangswelle im einfachsten Fall lediglich eine Information wie "Schmieröldruck gleich Null" beziehungsweise "Schmieröldruck ungleich Null" notwendig. Somit genügt ein besonders kostengünstiger einfacher Öldruckschalter zur Durchführung des Verfahrens. Dadurch wird ein weitgehender Schutz der Kupplung und gegebenenfalls des Getriebes vor Beschädigungen bei reversierenden Drehrichtungen gewährleistet.

Im Falle eines Drucksensors kann dieser zusätzlich zur Überwachung der Füllmenge bzw. des Ölstandes im Getriebe eingesetzt werden, wodurch ein Ölmangel im Getriebe signalisierbar sowie gegebenenfalls Fehlerreaktionen und/oder Schutzmaßnahmen auslösbar sind, und somit eine weitere Erhöhung der Betriebssicherheit des Fahrzeugs erreichbar ist. Zudem kann dadurch sichergestellt werden, dass ein mangelnder Öldruck aufgrund eines Defektes, beispielsweise aufgrund eines Öllecks, nicht fälschlicherweise als eine reversierende Drehrichtung interpretiert wird.

Mit Hilfe eines Drucksensors ist, wie weiterhin vorgesehen sein kann, eine genaue Erfassung des zeitlichen Druckverlaufs des Getriebe-Öldruckes möglich, um einen Anstieg bzw. Abfall des Schmieröldrucks zu überwachen.

Aus dem Druckverlauf kann auch, beispielsweise wenn die Getriebeeingangswelle der Antriebswelle mit einer höheren Drehzahl vorauseilt, durch einen Vergleich des Druckverlaufs mit dem Drehzahlverlauf der Eingangswelle ein passiver Anfahrvorgang in der jeweils angewählten Fahrtrichtung erkannt werden, um durch eine entsprechende Ansteuerung der Kupplung auch hierbei eine unkontrollierte Geschwindigkeitszunahme zu vermeiden und ein komfortables Einkuppeln zu erleichtern.

Werden reversierende Drehrichtungen an der Anfahrkupplung erkannt, so besteht die Möglichkeit, das Fahrzeug mittels der Kupplung abzufangen, wenn dabei eine dem Schließvorgang zugehörige Kupplungsbelastung in einem zulässigen Bereich bleibt, oder ansonsten die Kupplung offen zu lassen. Dabei kann der Schließgrad der Kupplung bezüglich des Anpressdrucks und des zeitlichen Verlaufs variabel sein, um einen möglichst hohen Schaltkomfort bei gleichzeitiger Vermeidung einer übermäßigen Kupplungsbelastung zu erreichen, wobei als ein Parameter zur Vorbestimmung der zu erwartenden Kupplungsbelastung insbesondere die Differenzdrehzahl zwischen der Drehzahl der Antriebswelle und der Drehzahl der Getriebeeingangswelle unter Berücksichtung der Drehrichtungen dieser Wellen herangezogen wird. Zum Schutz der Kupplung bleibt beispielsweise bei Differenzdrehzahlen oberhalb eines vorgegebenen Schwellwertes die Kupplung geöffnet.

Grundsätzlich können zur Vorbestimmung der Kupplungsbelastung alle zur Verfügung stehenden relevanten Betriebsparameter, beispielsweise über das Fahrzeuggewicht, die Fahrbahnneigung und die Anrollrichtung, beispielsweise Vorwärtsanrollen bei eingelegtem Rückwärtsgang oder Rückwärtsanrollen bei eingelegtem Vorwärtsgang, berücksichtigt werden.

Auch sind weitere Maßnahmen als Folge erkannter reversierender Drehrichtungen möglich. Beispielsweise kann das Getriebe in eine Neutralstellung geschaltet werden. Denkbar ist auch ein aktiver Bremseingriff der Betriebsbremse des Fahrzeugs, um das Fahrzeug sicher zum Stillstand zu bringen, bevor ein erneuter Anfahrversuch gestartet wird. Dadurch kann der Schutz der Kupplung und des Getriebes vor Beschädigungen bei reversierenden Drehrichtungen sowie die Fahrsicherheit noch weiter verbessert werden.

Außerdem kann vorgesehen sein, dass bei einer motordrehzahlabhängig schaltenden Anfahrkupplung eine Betätigung der Anfahrkupplung bei einem erkannten passiven Anfahrvorgang über eine Drehzahlregelung des Antriebsmotors gesteuert wird. Dadurch kann das Verfahren auch bei selbsttätigen Fliehkraftkupplungen vorteilhaft verwendet werden. Insbesondere kann über eine Motorsteuerung die Motordrehzahl so beeinflusst werden, dass je nach zu erwartender Kupplungsbelastung die Kupplung betätigt oder nicht betätigt wird.

Zur Verdeutlichung der Erfindung ist der Beschreibung eine Zeichnung eines Ausführungsbeispiels beigefügt.

In dieser zeigt
- Fig. 1: eine schematische Darstellung eines Antriebsstranges eines Nutzkraftfahrzeuges mit einer automatischen Kupp- lung,
- Fig. 2: ein Diagramm zur Korrelation zwischen Schmieröldruck und Getriebeeingangswellen-Drehrichtung und
- Fig. 3: ein weiteres Diagramm zur Korrelation zwischen Schmier- öldruck und Getriebeeingangswellen-Drehrichtung.

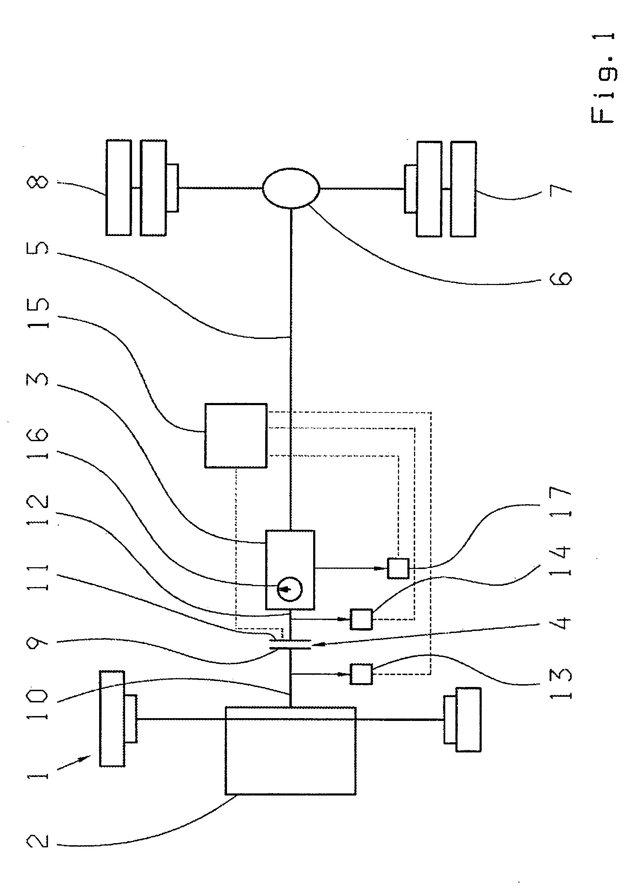

Demnach ist in Fig. 1 ein Nutzkraftfahrzeug 1 mit einem als Verbrennungsmotor ausgebildeten Antriebsmotor 2 und einem als automatisierten Schaltgetriebe 3 ausgebildeten Geschwindigkeitswechselgetriebe gezeigt. Der Antriebsmotor 2 und das Getriebe 3 sind über ein als Reibkupplung ausgebildetes automatisches Anfahrelement 4 kraftschlüssig miteinander verbindbar. Die automatische Anfahrkupplung 4 ist über ein (nicht dargestelltes) Stellglied mittels einer Steuerungseinrichtung 15 ansteuerbar. Ein durch das Getriebe 3 übersetztes Antriebsmoment des Antriebsmotors 2 ist in bekannter Weise über eine Getriebeabtriebswelle 5 und ein Differenzial 6 auf die angetriebenen Fahrzeugräder 7, 8 des Nutzkraftfahrzeugs 1 übertragbar.

Die Anfahrkupplung 4 ist mit ihrer Primärseite 9 über eine Antriebswelle (Kurbelwelle) 10 mit dem Antriebsmotor 2 und mit ihrer Sekundärseite 11 mit einer Getriebeeingangswelle 12, die in das Getriebe 3 führt, verbunden. Weiterhin sind der Antriebswelle 10 und der Getriebeeingangswelle 12 Drehzahlsensoren 13 und 14 zugeordnet, über welche die Drehzahlen der Antriebswelle 10 und der Getriebeeingangswelle 12 der Steuerungseinrichtung 15 zuführbar sind.

Das Getriebe 3 weist zur Schmierung und Kühlung eine Ölpumpe 16 auf, die mit der Getriebeeingangswelle 12 antriebsgekoppelt ist, und abhängig von der Drehrichtung der Getriebeeingangswelle 12 Schmieröl fördert sowie einen Schmieröldruck im Getriebe 3 erzeugt. Schließlich ist ein Öldrucksensor 17 vorhanden, über dessen Signalausgang der Wert des Öldrucks im Getriebe 3 der Steuerungseinrichtung 15 zuführbar ist.

Im Folgenden wird ein Ausführungsbeispiel des erfindungsgemäßen Verfahrens an einem typischen Betriebs-Szenario eines solchen Nutzkraftfahrzeuges 1 beschrieben.

Das Fahrzeug 1 steht an einem Hang und soll rückwärts bergan an dem Hang manövriert werden. Idealerweise würde sich das Fahrzeug 1 bei eingelegtem Rückwärtsgang beim Schließen der Anfahrkupplung 4 in die vorgesehene Fahrtrichtung, also rückwärts, in Bewegung setzten. Die Primärseite 9 mit der Antriebswelle 10 und die Sekundärseite 11 der Anfahrkupplung 4 mit der Getriebeeingangswelle 12 weisen dabei die gleiche Drehrichtung und bei schlupffreier kraftschlüssiger Verbindung auch die gleichen Drehzahlen, also die Motordrehzahl auf.

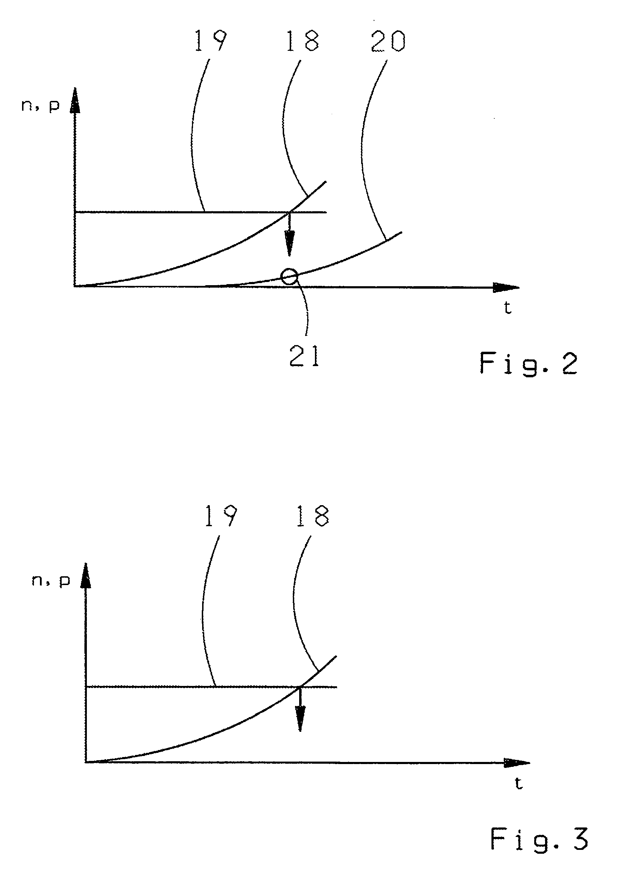

Dazu ist in Fig. 2 in vereinfachter Darstellung beispielhaft ein Drehzahlverlauf 18 der Getriebeeingangswelle 12 im Vergleich zu einer Motordrehzahl 19 und einem Öldruckverlauf 20 der Getriebeölpumpe 16 dargestellt, wobei die Drehzahl n beziehungsweise der Druck p über der Zeit t aufgetragen sind. Die Steuerungseinrichtung 15 registriert zu einem Zeitpunkt 21 einen regulären Anfahrvorgang, bei dem die Drehzahl der Getriebeeingangswelle 12 mit der Drehzahl des Antriebsmotors 2 übereinstimmt und ein entsprechender korrekter Öldruck größer Null durch die Ölpumpe 16 erzeugt sowie durch den Drucksensor 17 festgestellt wird.

Aufgrund des Fahrwiderstands an der Fahrbahnneigung beginnt das Fahrzeug 1 jedoch bei eingelegtem Rückwärtsgang und noch geöffneter Anfahrkupplung 4 in Vorwärtsrichtung zu rollen, welches einem irregulären passiven Anfahrvorgang entspricht. Dabei wird die Getriebeeingangswelle 12 über die Fahrzeugräder 7 und 8, das Differenzial 6, die Getriebeabtriebswelle 5 und das Getriebe 3 angetrieben. Aufgrund der Vorwärtsbewegung des Fahrzeugs 1 in Wirkverbindung mit dem eingelegten Rückwärtsgang kommt es zur Reversierung der Drehrichtung der Getriebeeingangswelle 12, so dass sich die Getriebeeingangswelle 12 und mit ihr die Sekundärseite 11 der Anfahrkupplung 4 entgegen der Antriebswelle 10 und damit der Primärseite 9 der Anfahrkupplung 4 dreht.

Das Resultat der ungleichen Drehrichtungen von Motor 1 und Getriebeeingangswelle 5 ist in Fig. 3 dargestellt. Obwohl die Getriebeeingangswellen-Drehzahl 18 durch das Anrollen des Fahrzeugs 1 ansteigt, registriert die Steuerungseinrichtung 15 keinen Schmieröldruck bzw, einen Druck gleich Null oder wenigstens keinen Schmieröldruckanstieg. Die Steuerungseinrichtung 15 erkennt daran reversierende Drehrichtungen bezüglich der Anfahrkupplung 4 und stellt einen entsprechenden Signalwert zur Verfügung. Dieser Wert kann mit der aktuellen Drehzahldifferenz und vorteilhafterweise mit weiteren zur Verfügung stehenden Betriebsparametern weiterverarbeitet werden.

Als Ergebnis wird ein Signal ausgegeben, mit dem die Anfahrkupplung 4 entweder angesteuert wird, um das Fahrzeug 1 abzufangen und in die gewünschte Richtung in Bewegung zu setzten oder mit dem die Anfahrkupplung 4 zunächst geöffnet bleibt, um eine drohende Kupplungsüberlastung bzw. das Abwürgen des Antriebsmotors 2 zu verhindern und um gegebenenfalls weitere Maßnahmen auszulösen.

### Bezugszeichen

- 1: Kraftfahrzeug
- 2: Antriebsmotor
- 3: Geschwindigkeitswechselgetriebe
- 4: Anfahrelement
- 5: Getriebeabtriebswelle
- 6: Differenzial
- 7: Fahrzeugrad
- 8: Fahrzeugrad
- 9: Kupplungs-Primärseite
- 10: Antriebswelle
- 11: Kupplungs-Sekundärseite
- 12: Getriebeeingangswelle
- 13: Drehzahlsensor
- 14: Drehzahlsensor
- 15: Steuerungseinrichtung
- 16: Getriebeölpumpe
- 17: Öldrucksensor
- 18: Getriebeeirigangswellen-Drehzahlverlauf
- 19: Antriebsmotor-Drehzahl
- 20: Getriebeöldruckverlauf
- 21: Zeitpunkt

- n: Drehzahl-Ordinate
- p: Druck-Ordinate
- t: Zeit-Abszisse

## Patentansprüche

1. Verfahren zur Erkennung eines passiven Anfahrvorgangs bei einem Kraftfahrzeug (1), beispielsweise eines unerwünschten Anfahrvorgangs, bei dem sich das Fahrzeug (1) entgegen einer angewählten gangbezogenen Fahrtrichtung in Bewegung setzt, mit Mitteln zur Erfassung reversierender Drehrichtungen einer mit einer Getriebeeingangswelle (12) eines Geschwindigkeitswechselgetriebes (3) verbundenen Sekundärseite (11) eines automatischen Anfahrelementes (4), gegenüber einer mit einer Antriebswelle (10) eines Antriebsmotors (2) verbundenen Primärseite (9) des Anfahrelementes (4), wobei dem Geschwindigkeitswechselgetriebe (3) eine drehrichtungsabhängig fördernde Getriebeölpumpe (16) zugeordnet ist, **dadurch gekennzeichnet, dass** die Drehzahl der Getriebeeingangswelle (12) und der Öldruck in dem Geschwindigkeitswechselgetriebe (3) zeitaufgelöst erfasst und einer Korrelationsprüfung unterzogen werden, mittels derer bei einer mangelnden Korrelation nicht gleiche Drehrichtungen der Primärseite (9) und der Sekundärseite (11) des Anfahrelementes (4) festgestellt werden, und dass als Folge auf einen daraus erkannten unerwünschten passiven Anfahrvorgang antriebsrelevante Maßnahmen eingeleitet werden.

2. Verfahren nach Anspruch 1, **dadurch gekennzeichnet, dass** aus einem Drehzahlanstieg der Getriebeeingangswelle (12), der keinen Anstieg des Öldrucks im Geschwindigkeitswechselgetriebe (3) verursacht, auf eine reversierte Drehrichtung der Getriebeeingangswelle (12) geschlossen wird.

3. Verfahren nach Anspruch 1 oder 2, **dadurch gekennzeichnet, dass** das Anfahrelement (4) eine Anfahrkupplung ist, die bei einem erkannten unerwünschten passiven Anfahrvorgang wenigsten bis zu einem vorbestimmten variablen Schließgrad geschlossen wird, wenn **dadurch** eine vorbestimmte maximal zulässige Kupplungsbelastung nicht überschritten wird, und dass die Anfahrkupplung (4) ansonsten geöffnet bleibt.

4. Verfahren nach Anspruch 3, **dadurch gekennzeichnet, dass** die maximal zulässige Kupplungsbelastung wenigstens mit Hilfe einer Differenzdrehzahl von Antriebswelle (10) und Getriebeeingangswelle (12) unter Berücksichtung der Drehrichtungen der Wellen (10,12) bestimmt wird.

5. Verfahren nach zumindest einem der Ansprüche 1 bis 4, **dadurch gekennzeichnet, dass** bei einer motordrehzahlabhängig schaltenden Anfahrkupplung (4) eine Betätigung der Anfahrkupplung (4) bei einem erkannten passiven Anfahrvorgang über eine Drehzahlregelung des Antriebsmotors (2) gesteuert wird.

6. Verfahren nach zumindest einem der Ansprüche 1 bis 5, **dadurch gekennzeichnet, dass** der Getriebe-Öldruck mit Hilfe eines Druckschalters überwacht wird.

7. Verfahren nach zumindest einem der Ansprüche 1 bis 5. **dadurch gekennzeichnet, dass** der Getriebe-Öldruck mit Hilfe eines Drucksensors (17) überwacht wird.

8. Verfahren nach Anspruch 7, **dadurch gekennzeichnet, dass** die Drucküberwachung des Getriebeöldrucks zusätzlich eine Überwachung eines Ölstandes in dem Getriebe (3) einschließt.

9. Verfahren nach zumindest einem der Ansprüche 1 bis 8, **dadurch gekennzeichnet, dass** ein zeitabhängiger Druckverlauf des Getriebe-Öldruckes erfasst wird.

10. Verfahren nach Anspruch 9, **dadurch gekennzeichnet, dass** mit Hilfe des zeitabhängig erfassten Druckverlaufs des Getriebeöldrucks ein passiver Anfahrvorgang in einer angewählten Fahrtrichtung erkannt wird.

## Claims

1. Method for identifying a passive starting process in a motor vehicle (1), for example an undesired starting process, when the vehicle (1) starts to move in the opposite direction to a selected, gearspeed-related direction of movement, having means for sensing reversing rotational directions of a secondary side (11), connected to a gearbox input shaft (12) of a change speed gearbox (3), of an automatic starting element (4), with respect to a primary side (9) connected to a drive shaft (10) of a drive engine (2), of the starting element (4), wherein a transmission oil pump (16) which delivers as a function of the direction of rotation is assigned to the change speed gearbox (3), **characterized in that** the rotational speed of the gearbox input shaft (12) and the oil pressure in the change speed gearbox (3) are sensed with time resolution and are subjected to correlation checking by means of which, in the event of a lack of correlation, non-identical directions of rotation of the primary side (9) and of the secondary side (11) of the starting element (4) are detected, and **in that** drive-related measures are initiated as a result of an undesired passive starting process identified therefrom.

2. Method according to Claim 1, **characterized in that** a reversed direction of rotation of the gearbox input shaft (12) is inferred from an increase in rotational speed of the gearbox input shaft (12), which does not bring about a rise in the oil pressure in the change speed gearbox (3).

3. Method according to Claim 1 or 2, **characterized in that** the starting element (4) is a starting clutch which, in the event of an undesired passive starting process being identified is closed at least up to a predetermined, variable degree of closing if, as a result, a predetermined maximum permissible clutch load is not exceeded, and **in that** the starting clutch (4) otherwise remains open.

4. Method according to Claim 3, **characterized in that** the maximum permissible clutch loading is determined at least with the aid of a differential rotational speed of the drive shaft (10) and gearbox input shaft (12) while taking into account the rotational directions of the shafts (10, 12).

5. Method according to at least one of Claims 1 to 4, **characterized in that**, when there is a starting clutch (4) which shifts as a function of the engine speed, activation of the starting clutch (4) controlled by means of a rotational speed controller of the drive engine (2) when a passive starting process is identified.

6. Method according to at least one of Claims 1 to 5, **characterized in that** the gearbox oil pressure is monitored with the aid of a pressure switch.

7. Method according to at least one of Claims 1 to 5, **characterized in that** the gearbox oil pressure is monitored with the aid of a pressure sensor (17).

8. Method according to Claim 7, **characterized in that** the monitoring of the gearbox oil pressure additionally includes monitoring of an oil level in the gearbox (3).

9. Method according to at least one of Claims 1 to 8, **characterized in that** a time-dependent pressure profile of the gearbox oil pressure is sensed.

10. Method according to Claim 9, **characterized in that** a passive starting process in a selected direction of travel is identified with the aid of the pressure profile, sensed as a function of time, of the gearbox oil pressure.

## Revendications

1. Procédé de détection d'un processus de démarrage passif d'un véhicule automobile (1), par exemple d'un processus de démarrage indésirable, dans lequel le véhicule (1) est mis en mouvement en sens opposé à un sens de conduite défini par une vitesse sélectionnée, comprenant des moyens pour détecter des sens de rotation inversés d'un côté secondaire (11) d'un élément de démarrage automatique (4) connecté à un arbre d'entrée de boîte de vitesses (12) d'une boîte de vitesses (3), par rapport à un côté primaire (9) de l'élément de démarrage (4) connecté à un arbre d'entraînement (10) d'un moteur d'entraînement (2), une pompe à huile de transmission (16) refoulant en fonction du sens de rotation étant associée à la boîte de vitesses (3), **caractérisé en ce que** la vitesse de rotation de l'arbre d'entrée de boîte de vitesses (12) et la pression d'huile dans la boîte de vitesses (3) sont détectées avec une résolution temporelle et sont soumises à une vérification de corrélation, au moyen de laquelle, en l'absence d'une corrélation, on constate des sens de rotation différents du côté primaire (9) et du côté secondaire (11) de l'élément de démarrage (4), et **en ce qu'**à la suite d'un processus de démarrage passif indésirable ainsi détecté, les mesures appropriées en terme d'entraînement sont mises en oeuvre.

2. Procédé selon la revendication 1, **caractérisé en ce que** l'on déduit que le sens de rotation de l'arbre d'entrée de boîte de vitesses (12) a été inversé à partir d'une augmentation de la vitesse de rotation de l'arbre d'entrée de boîte de vitesses (12) qui ne provoque aucune augmentation de la pression d'huile dans la boîte de vitesses (3).

3. Procédé selon la revendication 1 ou 2, **caractérisé en ce que** l'élément de démarrage (4) est un embrayage de démarrage, qui, lorsqu'un processus de démarrage passif indésirable est détecté, est fermé au moins jusqu'à un degré de fermeture variable prédéterminé, lorsque de ce fait une charge maximale admissible prédéterminée sur l'embrayage n'est pas dépassée, et autrement, **en ce que** l'embrayage de démarrage (4) reste ouvert.

4. Procédé selon la revendication 3, **caractérisé en ce que** la charge maximale admissible de l'embrayage est déterminée au moins à l'aide d'une vitesse de rotation différentielle de l'arbre d'entraînement (10) et de l'arbre d'entrée de boîte de vitesses (12) en tenant compte des sens de rotation des arbres (10, 12).

5. Procédé selon au moins l'une quelconque des revendications 1 à 4, **caractérisé en ce que** dans le cas d'un embrayage de démarrage (4) commutant en fonction du régime du moteur, un actionnement de l'embrayage de démarrage (4) est commandé dans le cas d'une détection d'un processus de démarrage passif par le biais d'une régulation du régime du moteur d'entraînement (2).

6. Procédé selon au moins l'une quelconque des revendications 1 à 5, **caractérisé en ce que** la pression d'huile de la boîte de vitesses est contrôlée à l'aide d'un commutateur de pression.

7. Procédé selon au moins l'une quelconque des revendications 1 à 5, **caractérisé en ce que** la pression d'huile de la boîte de vitesses est contrôlée à l'aide d'un capteur de pression (17).

8. Procédé selon la revendication 7, **caractérisé en ce que** le contrôle de la pression de la pression d'huile de la boîte de vitesses inclut en outre un contrôle d'un niveau d'huile dans la boîte de vitesses (3).

9. Procédé selon au moins l'une quelconque des revendications précédentes 1 à 8, **caractérisé en ce qu'**une courbe de pression de la pression d'huile de la boîte de vitesses dépendant du temps est détectée.

10. Procédé selon la revendication 9, **caractérisé en ce qu'**un processus de démarrage passif est détecté dans une direction de conduite sélectionnée à l'aide de la courbe de pression de la pression d'huile de la boîte de vitesses détectée en fonction du temps.
